# EUROPÄISCHE PATENTSCHRIFT

(11) **EP 3 415 248 B1**
(45) Veröffentlichungstag und Bekanntmachung des Hinweises auf die Patenterteilung: **13.10.2021**
(21) Anmeldenummer: 18173622.4
(22) Anmeldetag: 22.05.2018
(51) Int. Cl.: B21D 53/90, B21D 53/88, B60B 35/00, B60B 35/16

(54) **VERFAHREN ZUR HERSTELLUNG EINES ACHSKÖRPERS**
METHOD FOR PRODUCING AN AXEL BODY
PROCÉDÉ DE FABRICATION D'UN CORPS D'ESSIEU

(30) Priorität: 12.06.2017 DE 102017112861
(43) Veröffentlichungstag der Anmeldung: 19.12.2018
(73) Patentinhaber: MAN Truck & Bus SE, 80995 München (DE)
(72) Erfinder: Gratzl, Roland, 80999 München (DE)
(74) Vertreter: v. Bezold & Partner Patentanwälte - PartG mbB

(56) Entgegenhaltungen:
- EP-A2- 1 872 982
- WO-A1-2005/018956
- DE-A1-102013 003 300
- DE-C1- 4 232 779

## Beschreibung

Die Erfindung betrifft ein Verfahren zur Herstellung eines Achskörpers eines Kraftfahrzeugs, insbesondere eines Nutzfahrzeugs.

Ein im Stand der Technik bekanntes Verfahren zum Herstellen eines Achskörpers für ein Fahrzeug ist in der WO 2005/018956 A1 offenbart. Ein weiteres Herstellungsverfahren ist in der DE 10 2013 003 300 A1 offenbart.

Achskörper eines Kraftfahrzeugs müssen mit einem Fahrwerk des Kraftfahrzeugs verbunden werden. Zur Fahrwerkanbindung können Konsolen beispielsweise über Kehlschweißnähte auf den Achskörper aufgeschweißt werden. Alternativ oder zusätzlich ist es möglich, Metallstreifen zur formschlüssigen Fahrwerkanbindung auf den Achskörper zu schweißen. Hierbei können beispielsweise durch ein Schmelzschweißverfahren erzeugte Heftpunkte die Metallstreifen und den Achskörper verbinden. Nachfolgend können die Metallstreifen abgefräst werden, um eine definierte Breite des Querschnitts für die formschlüssige Montage der Fahrwerkanbindung sicherzustellen.

Die bekannten Verfahren, die das Anschweißen von Konsolen und/oder Metallstreifen aufweisen, können nachteilig sein.

Sowohl die Kehlnähte der aufgeschweißten Konsolen als auch die mittels Heftschweißung angebrachten Metallstreifen reduzieren die Beanspruchbarkeit des Grundmaterials im tragenden Querschnitt. Diese Schwächung tritt insbesondere in der hochbeanspruchten Randzone der Außenkontur auf. Die Schwächung tritt auch bei einer theoretisch fehlerfreien Schweißung zum Beispiel durch Eigenspannungen aufgrund des Wärmeeintrags auf.

Zusätzlich kann es zu Steifigkeitssprüngen im Randbereich von Konsolen, an Briden, Spannplatten und Fahrwerkanbindungen kommen. Dies kann zu hohen lokalen Beanspruchungen in dem Achskörper führen. Ein Niederspannen des Achsquerschnitts für die Montage der Fahrwerkanbindung mittels Briden, eine Klemmung mittels Spannplatten und Schrauben oder die direkte Verschraubung in aufgeschweißte Konsolen führt zu einer hohen Vorlast im Achsquerschnitt.

Besteht ein unzureichender Formschluss der Metallstreifen oder der Konsole in Fahrzeuglängsrichtung oder in vertikaler Richtung bei aufgeschweißten Konsolen hat dies eine erhöhte Beanspruchung der Heftpunkte oder Schweißnähte zur Folge.

Schweißnähte können ungünstige Formen und Übergänge aufweisen, deren Resultat eine ungewünschte Spannungsüberhöhung sein kann.

Zusätzlich können Binde- oder Wurzelfehler an Schmelzschweißungen fertigungsbedingt auftreten. Diese können sich insbesondere im hochbeanspruchten Bereich von Schweißnahtanfang und Schweißnahtende negativ auf die Beanspruchbarkeit des Achsquerschnitts auswirken.

Bei einer Auslegung mittels Finite-Elemente-Methode und Lebensdauerabschätzungen erschweren die oben genannten fertigungsbedingten Streuungen die Prognosefähigkeit. Im experimentellen Betriebsfestigkeitsnachweis wirken sich die oben genannten fertigungsbedingten Streuungen negativ auf die statistisch nachzuweisende Lebensdauer aus, da ein höherer Risikofaktor bei stark streunenden Ergebnissen berücksichtigt werden muss.

Zusätzlich können Spalte hinter den Streifen und Konsolen nicht lackiert werden und daher während des Betriebs des Kraftfahrzeugs leichter korrodieren.

Die DE 42 32 779 C1 offenbart einen Achskörper und eine dazu passende Achseinbindung. Um die Achseinbindung nur mit Kraft- und Formschluß ohne Schweißverbindung zu gestalten, wird vorgeschlagen, den Achskörper an Boden und Decke mit einer Bombierung zu versehen und Achsplatten sowie Füllstücke mit entsprechend konkav geformten Druckflächen an dem Achskörper einzubinden.

Der Erfindung liegt die Aufgabe zu Grunde, ein verbessertes Verfahren zur Herstellung eines Achskörpers vorzusehen. Der Erfindung liegt insbesondere die Aufgabe zu Grunde, ein Herstellungsverfahren vorzusehen, das eine formschlüssige Fahrwerkanbindung des Achskörpers ermöglicht.

Die Aufgaben werden durch ein Verfahren zur Herstellung eines Achskörpers, insbesondere einer Achsbrücke, eines Kraftfahrzeugs, vorzugsweise eines Nutzfahrzeugs, gemäß dem unabhängigen Anspruch gelöst. Vorteilhafte Weiterbildungen sind in den abhängigen Ansprüchen und der Beschreibung angegeben.

Das Verfahren weist das Fügen, insbesondere Verschweißen, einer ersten Achskörperschale und einer zweiten Achskörperschale zum Ausbilden eines, insbesondere hohlen, Achskörpers auf. Das Verfahren weist zudem das Umformen eines für eine Fahrwerksanbindung des Achskörpers vorgesehenen Befestigungsbereichs des Achskörpers zur Annäherung eines Istmaßes des Befestigungsbereichs an ein für die Fahrwerksanbindung benötigtes Sollmaß des Befestigungsbereichs auf.

Das Umformen ermöglicht einen stetigen Steifigkeitsverlauf in der Achshalbschale. Während des Umformens findet sozusagen eine Kalibrierung der relevanten Abmessung des Befestigungsbereichs zur formschlüssigen Fahrwerkanbindung statt. Zusätzlich können die im Stand der Technik verwendeten Metallstreifen zum formschlüssigen Verbinden eingespart werden. Die Streifen müssen auch nicht aufwendig aufgeschweißt werden, was teilweise ein Vorwärmen erforderlich machte. D.h., das hierin offenbarte Herstellungsverfahren kann eine Prozessdauer verkürzen. Durch den spaltfreien Formschluss zur Fahrwerksanbindung ist eine optimale Kraftübertragung sichergestellt. Alle Oberflächen können lackiert werden. Dies ermöglicht einen guten Korrosionsschutz.

Bei einer Auslegung mittels Finite-Elemente-Methode (FEM) und bei Lebensdauerabschätzungen ergeben sich eine gute Prognosefähigkeit, da keine Schweißpunkte und/oder -nähte am Befestigungsbereich vorhanden sind. Aufgrund des Fehlens der Schweißverbindungen gibt es im experimentellen Betriebsfestigkeitsnachweis zudem tendenziell eine weniger starke Streuung der Ergebnisse. Dies wirkt sich aufgrund kleinerer Risikofaktoren positiv auf die statistisch nachzuweisende Lebensdauer aus.

Der Achskörper kann eine Mehrzahl von Befestigungsbereichen aufweisen.

Der Achskörper kann insbesondere rohrförmig sein und/oder sich geradlinig erstrecken.

Der Achskörper kann insbesondere ein Achskörper einer Fahrzeugstarrachse sein.

In einer Weiterbildung ist die erste Achskörperschale und/oder die zweite Achskörperschale so ausgelegt, dass das Istmaß des Befestigungsbereichs nach dem Fügen das Sollmaß des Befestigungsbereichs überschreitet. Somit kann gewährleistet werden, dass ein Umformen zur Annäherung an das Sollmaß stattfinden kann.

In einer vorteilhaften Weiterbildung weist der Befestigungsbereich vor dem Umformen ein erstes Istmaß, das größer als das Sollmaß ist, und nach dem Umformen ein zweites Istmaß, das kleiner als das erste Istmaß und/oder größer als das Sollmaß oder gleich dem Sollmaß ist, auf.

In einer Ausführungsform geben das Istmaß und das Sollmaß einen Abstand zweier entgegengesetzter Flächen des Befestigungsbereichs an.

Insbesondere kann jeder Befestigungsbereich mehrere (Befestigungs-) Abschnitte aufweisen.

Vorteilhafterweise weist der Befestigungsbereich einen ersten, insbesondere flächigen, vorzugsweise streifenförmigen, Abschnitt und einen zweiten, insbesondere flächigen, vorzugsweise streifenförmigen, Abschnitt auf. Der erste Abschnitt und der zweite Abschnitt erstrecken sich vorzugsweise entlang einer Längsrichtung des Achskörpers und sind insbesondere auf gegenüberliegenden Seiten des Achskörpers angeordnet. Das Istmaß und das Sollmaß geben einen Abstand zwischen dem ersten Abschnitt und dem zweiten Abschnitt an.

Der Abstand (das Istmaß und das Sollmaß) kann insbesondere in einer Richtung senkrecht zu einer Längsachse des Achskörpers gemessen sein.

In einer weiteren Ausführungsform weist das Umformen des Befestigungsbereichs ein Zusammenpressen des Befestigungsbereichs auf. Alternativ oder zusätzlich weist das Umformen des Befestigungsbereichs ein Umformen eines Querschnitts des Achskörpers auf.

Beim Umformen kann insbesondere eine Materialstärke (Wandstärke) des Achskörpers (des Befestigungsbereichs) beibehalten werden.

In einem Ausführungsbeispiel weist das Verfahren ferner das Nachbearbeiten des umgeformten Befestigungsbereichs zur Annäherung oder Erreichung des Sollmaßes auf. Damit kann gegebenenfalls eine zu große Differenz zwischen dem Istmaß und dem Sollmaß verringert oder beseitigt werden.

In einem weiteren Ausführungsbeispiel weist das Nachbearbeiten ein einseitiges oder mehrseitiges Abtragen von Material am Befestigungsbereich auf. Da das Istmaß durch das Umformen bereits stark dem Sollmaß angenähert wurde, ist die Stärke des abgetragenen Materials gering. Dadurch wird der Achsquerschnitt kaum reduziert und geschwächt. Eine geringe Querschnittsreduktion durch die Nachbearbeitung ist der Schwächung durch ein Schweißverfahren beim Anschweißen von Konsolen oder Streifen vorzuziehen. Dies trifft insbesondere mit Blick auf mögliche Binde- oder Wurzelfehler beim Schweißen und die aus dem Wärmeeintrag resultierenden Eigenspannungen zu. Die Beanspruchbarkeit des Grundmaterials wird nicht durch eine Schweißung herabgesetzt. Somit besteht Potenzial für geringere Wandstärken und hochwertigere Werkstoffe.

Eine Bearbeitungskontur für die Nachbearbeitung (die Materialabtragung) kann insbesondere einen kontinuierlichen Ein- und Auslauf aufweisen. Folglich kann die Kerbwirkung am Übergang minimiert werden.

In einer Ausführungsvariante wird beim Umformen des Befestigungsbereichs ein an den Befestigungsbereich angrenzender Übergangsbereich des Achskörpers zum Aufweisen einer Rundung und/oder eines tangentialen Übergangs zum Befestigungsbereich mitumgeformt. Durch die Gestaltung des Übergangsbereich kann die Kerbwirkung minimiert werden.

Der Übergangsbereich kann insbesondere in einer Querrichtung und/oder einer Längsrichtung des Achskörpers an den Befestigungsbereich grenzen.

In einer vorteilhaften Ausführungsvariante wird das Umformen mit einem Umformwerkzeug, insbesondere einem Presswerkzeug, durchgeführt.

Vorzugsweise weist das Umformwerkzeug einen flächigen Bereich zum Kontaktieren des Befestigungsbereichs und einen gerundeten Bereich zum Ausbilden eines gerundeten Übergangsbereichs des Achskörpers zu dem Befestigungsbereich auf. Der gerundete Bereich grenzt insbesondere tangential an den flächigen Bereich.

Das Umformwerkzeug kann insbesondere eine erste Pressbacke und eine zweite Pressbacke, die relativ zueinander bewegbar sind, aufweisen.

In einer Ausführungsform weist das Umformen eine Relativbewegung zweier Pressbacken des Umformwerkzeugs zueinander bis hin zu einem vorbestimmten Pressbackenabstand auf.

Alternativ oder zusätzlich weist das Umformen eine gesteuerte Relativbewegung zweier Pressbacken des Umformwerkzeugs zueinander basierend auf einem Abstand der zwei Pressbacken und einer erfassten Presskraft, die von den zwei Pressbacken auf den Befestigungsbereich ausgeübt wird, auf.

In einer weiteren Ausführungsform weist das Umformen ein plastisches Verformen des Befestigungsbereichs auf. Neben dem hier relevanten plastischen Verformen des Befestigungsbereichs kann zusätzlich eine elastische Verformung des Befestigungsbereichs während des Umformvorgangs stattfinden. Für das vorliegende Verfahren ist allerdings die Annäherung des Istmaßes des Befestigungsbereichs an das Sollmaß des Befestigungsbereichs mittels plastischer Verformung relevant.

Insbesondere kann das Umformwerkzeug so gesteuert werden, dass eine plastische Verformung zur Annäherung an das Sollmaß stattfindet.

Insbesondere kann das Umformwerkzeug den Befestigungsbereich so verformen, dass das Istmaß des Befestigungsbereichs das Sollmaß unterschreitet. Die Verformung des Befestigungsbereichs weist eine plastische Komponente und eine elastische Komponente auf. Nach dem Lösen des Umformwerkzeugs entspannt sich der Befestigungsbereich wieder, sodass nach "Freigabe" der elastischen Verformung das Sollmaß erreicht wird. Mit anderen Worten gesagt, kann beim Umformen eine elastische Komponente der Verformung des Befestigungsbereichs berücksichtigt werden, sodass zum Kompensieren der elastischen Verformung weiter als bis zum Sollmaß umgeformt wird.

In einer weiteren Ausführungsvariante weist das Verfahren das Lösen des Umformwerkzeugs vom umgeformten Befestigungsbereich und das, insbesondere formschlüssige, Befestigen (insbesondere formschlüssiges Befestigen) des umgeformten Befestigungsbereichs an einem Fahrwerk des Kraftfahrzeugs, insbesondere ohne Aufschweißen einer Befestigungskonsole und/oder eines Befestigungsstreifens auf den Befestigungsbereich, auf. Vor dem Befestigen kann der umgeformte Befestigungsbereich nachbearbeitet werden, wenn eine notwendige Toleranz für das Sollmaß für den Fahrwerkeinbau nicht vorliegt.

Insbesondere kann der Achskörper zwei Achskörperarme aufweisen, die jeweils eine erste Achskörperschale und eine zweite Achskörperschale zum Ausbilden des, insbesondere hohlen, Achskörperarms aufweisen. Die Achskörperarme können sich von einem Mittelteil des Achskörpers in entgegengesetzte Richtungen erstecken. Die jeweiligen Befestigungsbereiche können in einem gemeinsamen Arbeitsgang, insbesondere gleichzeitig, umgeformt werden. Die Pressbacken des Umformwerkzeugs weisen eine definierte Positionierung relativ zueinander auf. Werden die Befestigungsbereiche zur Fahrwerkanbindung beider Achskörperarme in einem Arbeitsgang umgeformt, so können aufgrund der definierten Positionierung der Pressbacken zueinander Winkel- und/oder Lagefehler zwischen den Befestigungsbereichen der beiden Achskörperarme vermindert oder ausgeglichen werden.

Vorzugsweise weist die erste Achskörperschale im Wesentlichen ein U-Profil, die zweite Achskörperschale im Wesentlichen ein U-Profil, und/oder der Achskörper im Wesentlichen ein Rechteckprofil auf.

Vor dem Fügen kann das Verfahren zusätzlich das Umformen eines ersten Blechs zur ersten Achskörperschale und/oder das Umformen eines zweiten Blechs zur zweiten Achskörperschale aufweisen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: einen Achskörper eines Nutzfahrzeugs;
- Figur 2: einen Querschnitt des Achskörpers nach dem Fügen der Achskörperschalen;
- Figur 3: einen Querschnitt des Achskörpers während eines Umformungsvorgangs;
- Figur 4: einen Querschnitt des Achskörpers nach einem Umformungsvorgang;
- Figur 5: einen zusätzlich optionalen Verfahrensschritt zum Herstellen eines Achskörpers, der nach einem Umformen durchführbar ist.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

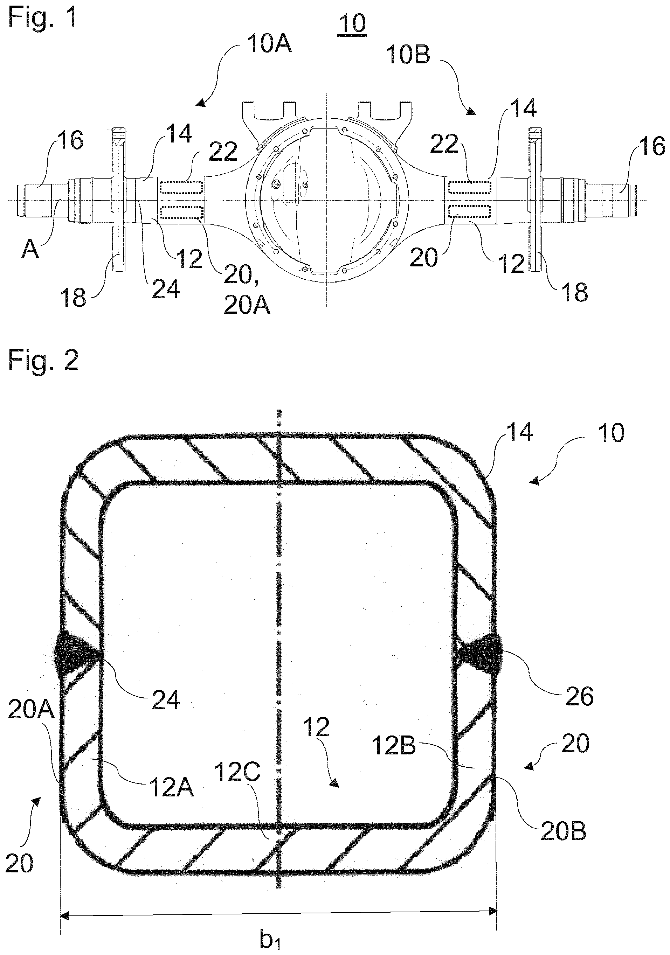

Die Figur 1 zeigt einen Achskörper 10. Der Achskörper 10 ist als eine Achsbrücke eines Nutzfahrzeugs ausgebildet. Das Nutzfahrzeug kann beispielsweise ein Lastkraftwagen oder ein Omnibus sein.

Jede Seite des Achskörpers 10 weist einen Achskörperarm 10A, 10B mit einer ersten (unteren) Achskörperschale 12, einer zweiten (oberen) Achskörperschale 14 und einem Achsstummel 16 auf. Die erste und zweite Achskörperschale 12 und 14 sind insbesondere als Achskörperhalbschalen ausgebildet. Die erste Achskörperschale 12 und die zweite Achskörperschale 14 sind entlang einer Längsachse Ades Achskörpers 10 miteinander verbunden, insbesondere verschweißt. Der Achsstummel 16 ist an ein Ende der miteinander verbundenen Achskörperschalen 12 und 14 gefügt, insbesondere geschweißt. Auf den Achskörper 10 kann ein Bremsflansch 18 einer Scheibenbremse oder Trommelbremse geschweißt sein. Durch den Achskörper 10 hindurch kann sich eine nicht dargestellte Steckwelle erstrecken.

Der Achskörper 10 wird über mehrere Befestigungsbereiche 20 und 22 (mit gepunkteten Linien in Figur 1 angedeutet) mit einem Fahrwerk (nicht dargestellt) des Kraftfahrzeugs verbunden.

Möglichkeiten zur Fahrwerkanbindung sind im Stand der Technik bekannt und daher hier nicht näher beschrieben. Die Fahrwerkanbindung kann beispielsweise mittels Briden oder einer Klemmung mit Spannplatten, die mit den Befestigungsbereichen 20 und 22 zusammenwirken, erfolgen. In anderen Ausführungsformen können mehr oder weniger Befestigungsbereiche vorgesehen sein.

Die Befestigungsbereiche 20 und 22 weisen insbesondere streifenförmige Abschnitte auf gegenüberliegenden Seiten des hohlen Achskörpers 10 auf.

Der Achskörper 10 soll über die Befestigungsbereiche 20 und 22 formschlüssig mit der Fahrwerkanbindung verbunden werden. Wie eingangs beschrieben, werden bei konventionellen Techniken beispielsweise Metallstreifen auf den Achskörper geschweißt und anschließend befräst, um eine definierte Abmessung für die formschlüssige Montage der Fahrwerkanbindung sicherzustellen. Die Metallstreifen bilden dann die Befestigungsbereiche.

Nachfolgend ist unter Bezugnahme auf die Figuren 2 bis 5 ein beispielhaftes Herstellungsverfahren zum Herstellen des Achskörpers 10 und insbesondere der Befestigungsbereiche 20 und 22 beschrieben. Der durch das Verfahren hergestellte Achskörper 10 kann formschlüssig mit der Fahrwerkanbindung verbunden werden, ohne dass zusätzliche Metallstreifen oder Konsolen vorgesehen werden müssen.

Die Figuren 2 bis 5 zeigen schematische Querschnitte (senkrecht zur Längsachse A) des hohlen Achskörpers 10 im Bereich der Befestigungsbereiche 20 und 22. Da es zum Verständnis der Erfindung ausreichend ist, wird lediglich die Herstellung des ersten Befestigungsbereichs 20 beschrieben. Weitere Befestigungsabschnitte können analog hergestellt werden.

Zunächst wird ein erstes Blech zu der ersten Achskörperschale 12 und ein zweites Blech zu der zweiten Achskörperschale 14 umgeformt. Die erste Achskörperschale 12 und die zweite Achskörperschale 14 weisen ein U-Profil auf. Die Achskörperschalen 12 und 14 werden an jeweiligen Kontaktflächen zur Vorbereitung auf die gegenseitige Verbindung befräst. Die erste Achskörperschale 12 und die zweite Achskörperschale 14 werden zusammengepresst und entlang einer Montagefuge miteinander über eine erste und zweite Schweißnaht 24, 26 verschweißt. Der gefügte Achskörper 10 weist im Querschnitt eine Rechteckform auf. In anderen Ausführungsformen können die Achskörperschalen und dementsprechend der Achskörper andere Querschnittsformen aufweisen.

Der Befestigungsbereich 20 weist einen ersten Abschnitt 20A einen zweiten Abschnitt 20B auf. Der erste Abschnitt 20A und der zweite Abschnitt 20B erstrecken sich streifenförmige entlang einer Längsrichtung des Achskörpers 10. Der erste Abschnitt 20A liegt dem zweiten Abschnitt 20B gegenüber. Ein erster Schenkel 12A der ersten Achskörperschale 12 weist den ersten Abschnitt 20A auf. Ein zweiter Schenkel 12B der ersten Achskörperschale 12 weist den zweiten Abschnitt 20B auf. Der erste Schenkel 12A und der zweite Schenkel 12B sind über einen dritten Schenkel 12C der Achskörperschale 12 miteinander verbunden. Der erste Schenkel 12A erstreckt sich parallel zum zweiten Schenkel 12B.

Zur formschlüssigen Fahrwerkanbindung kann insbesondere ein Abstand b₁ zwischen dem ersten Abschnitt 20A und dem zweiten Abschnitt 20B relevant sein. Dieser Abstand b₁ entspricht einer Breite des Achskörpers 10 gemessen zwischen dem ersten Abschnitt 20A und dem zweiten Abschnitt 20B.

In der dargestellten Ausführungsform wird das erste Blech so zu der ersten Achskörperschale 12 umgeformt, dass der Abstand b₁ nach dem Fügen mit der zweiten Achskörperschale 14 größer als ein zur formschlüssigen Fahrzeuganbindung benötigter Abstand ist, d.h. größer als ein Sollmaß ist. Mit anderen Worten gesagt, die erste Achskörperschale 12 ist so ausgelegt, dass gewährleistet ist, dass das Istmaß b₁ des Abstands zwischen dem ersten und zweiten Abschnitt 20A und 20B größer als das zur formschlüssigen Fahrwerkanbindung benötigte Sollmaß ist.

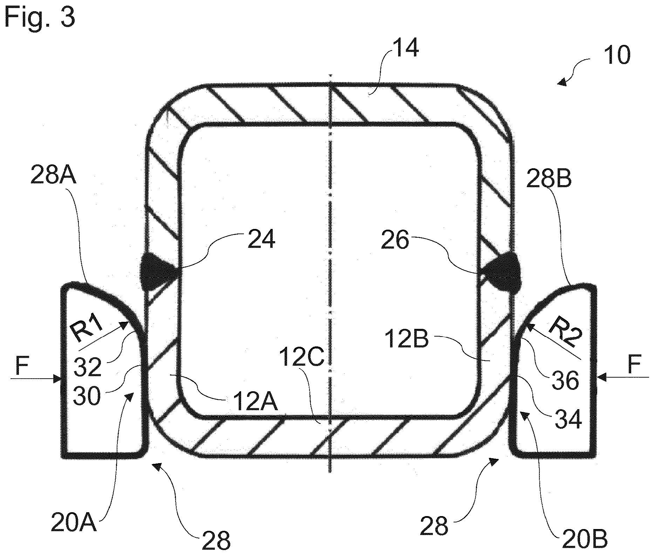

In Figur 3 ist dargestellt, wie der Befestigungsbereich 20 zur Annäherung an das zur formschlüssigen Fahrwerkanbindung benötigte Sollmaß umgeformt wird. Insbesondere wird der Befestigungsbereich 20 zusammengepresst. Der erste Abschnitt 20A und der zweite Abschnitt 20B nähern sich einander an. Dadurch nähert sich das Istmaß des Befestigungsbereichs 20 dem Sollmaß des Befestigungsbereichs 20 an.

Für die Umformung wird ein Umformwerkzeug 28 verwendet. Das Umformwerkzeug 28 ist als ein Presswerkzeug ausgebildet. Das Umformwerkzeug 28 weist eine erste Pressbacke (Spannbacke) 28A und eine zweite Pressbacke (Spannbacke) 28B auf. Die erste Pressbacke 28A kontaktiert den ersten Abschnitt 20A des Befestigungsbereichs 20. Die erste Pressbacke 28A verformt den ersten Abschnitt 20A in einer Richtung zu dem zweiten Abschnitt 20B. Die zweite Pressbacke 28B kontaktiert den zweiten Abschnitt 20B des Befestigungsbereichs 20. Die zweite Pressbacke 28B verformt den zweiten Abschnitt 20B in Richtung zu dem ersten Abschnitt 20A.

Das Zusammenpressen hat den Vorteil, dass eine Materialstärke des hohlen Achskörpers 10 und insbesondere des Befestigungsbereichs 20 nicht verringert wird. Dadurch wird der Befestigungsbereich 20 nicht geschwächt. Zum Zusammenpressen werden die Pressbacken 28A, 28B mit einer Presskraft F beaufschlagt.

Beim Zusammenpressen findet eine Relativbewegung zwischen der ersten Pressbacke 28A der zweiten Pressbacke 28B in einer Richtung zueinander statt. Die erste Pressbacke 28A kann zu der zweiten Pressbacke 28B, die zweite Pressbacke 28B kann zu der ersten Pressbacke 28A oder beide Pressbacken 28A und 28B können aufeinander zu bewegt werden.

Beim Umformen finden eine plastische und eine elastische Verformung des Befestigungsbereichs 20 statt. Der Umformvorgang wird so durchgeführt, dass die plastische Verformung zu einer Annäherung der Abschnitte 20A, 20B führt.

Das Presswerkzeug 28 kann beispielsweise bis hin zu einem vorbestimmten Pressbackenabstand (fixes Spannmaß) zusammenfahren. Es ist ebenso möglich, dass während des Zusammenfahrens der Pressbacken 28A und 28B über einen mitgemessenen Backenabstand und der Presskraft F in einem ein- oder mehrstufigen Umformprozess eine genau definierte Breite eingestellt wird.

Die erste Pressbacke 28A weist einen flächigen Pressbereich 30 zum Kontaktieren des ersten Abschnitts 20A auf. Die erste Pressbacke 28A weist einen gerundeten Pressbereich 32 zum Ausbilden eines gerundeten Übergangsbereichs zum ersten Abschnitt 20A auf. Der gerundete Pressbereich 32 kann beispielsweise mit einem Radius R1 verrundet sein. Analog kann die zweite Pressbacke 28B einen flächigen Pressbereich 34 und einen mit einem Radius R2 gerundeten Pressbereich 36 aufweisen.

Insbesondere laufen die Pressflächen der Pressbacken 28A und 28B an allen einen Querschnitt des Achskörpers 10 berührenden Kanten in einem stetigen Radius R aus, um eine Kerbwirkung zu vermeiden.

Nach dem Umformen wird das Umformwerkzeug 28 von dem Befestigungsbereich 20 gelöst.

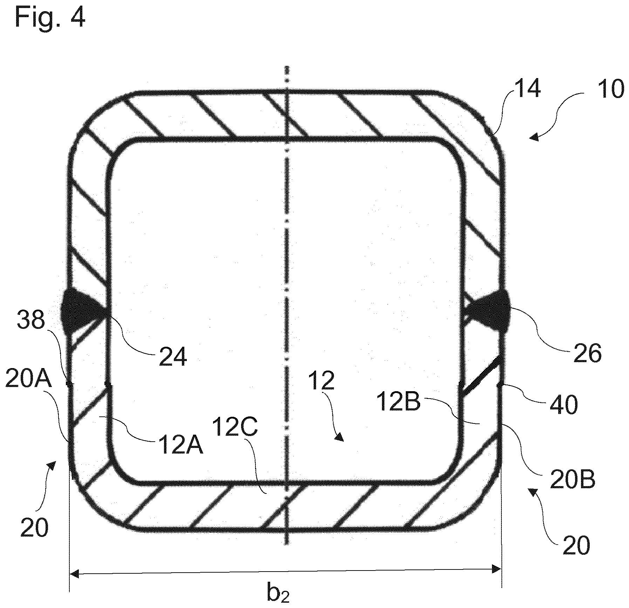

In der Figur 4 ist ein Abstand b₂ zwischen dem ersten Abschnitt 20A und dem zweiten Abschnitt 20B des Befestigungsbereichs 20 nach dem Umformen gezeigt. Der Abstand b₂ ist kleiner als der Abstand b₁ vor dem Umformen des Befestigungsabschnitts (siehe Figur 1).

In einigen Ausführungsformen kann der Abstand b₂ bereits dem für eine formschlüssige Fahrwerksanbindung benötigten Sollmaß des Abstands zwischen dem ersten Abschnitt 20A und dem zweiten Abschnitt 20B entsprechen. Dann kann der Achskörper 10 ohne weitere Nachbearbeitung direkt mit dem Fahrwerk verbunden werden. Insbesondere kann der umgeformte Befestigungsbereich 20 an einem Fahrwerk des Kraftfahrzeugs ohne Aufschweißen einer Befestigungskonsole und/oder eines Befestigungsstreifens auf den Befestigungsbereich befestigt werden.

Angrenzend an den ersten Abschnitt 20A wurde während des Umformungsverfahrens ein gerundeter Übergangsbereich 38 durch den gerundeten Pressbereich 32 (siehe Figur 3) ausgebildet. Der Übergangsbereich 38 geht tangential in den ersten Abschnitt 20A über. Der Übergangsbereich 38 weist den Radius R1 des gerundeten Pressbereichs 32 (siehe Figur 3) auf. Analog grenzt an den zweiten Abschnitt 20B ein gerundeter Übergangsbereich 40 an. Der Übergangsbereich 40 geht tangential in den zweiten Abschnitt 20B über und weist den Radius R2 des gerundeten Pressbereichs 36 (siehe Figur 3) auf. Damit wurde während des Umformverfahrens die Ausbildung einer scharfen Kante oder Kerbe vermieden und somit eine Spannungserhöhung durch Kerbwirkung durch das Eindrücken des Achsblechs minimiert..

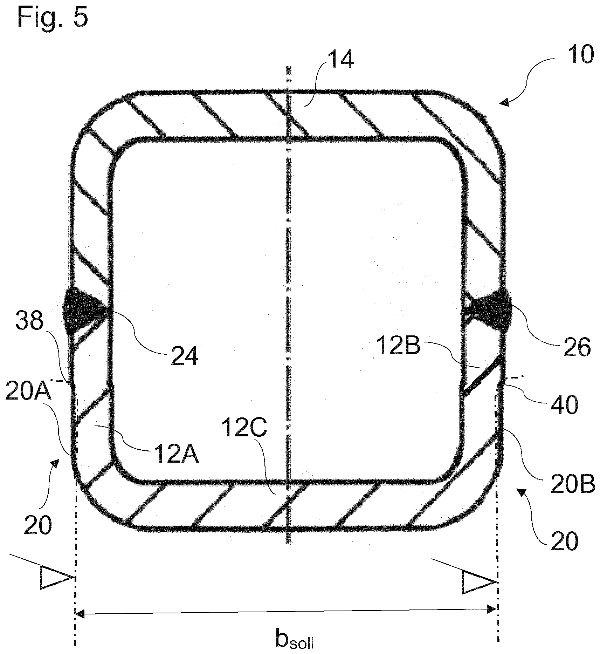

Figur 5 zeigt eine optionale Nachbearbeitung. Insbesondere kann, wenn der Abstand b₂ noch nicht dem Sollmaß entspricht, ein (geringer) Materialabtrag an den Abschnitten 20A, 20B vorgenommen werden. Dies ist in Figur 5 gezeigt, die exemplarisch das benötigte Sollmaß bₛₒₗₗ zeigt. Der notwendige Materialabtrag wird durch die Annäherung an das Sollmaß durch den Umformprozess sehr gering sein, sodass keine wesentliche Schwächung des Achskörpers 10 zu erwarten ist. Der Materialabtrag kann beispielsweise durch ein Befräsen oder Abschleifen der Abschnitte 20A und/oder 20B erfolgen. Der notwendige Materialabtrag ist in Figur 5 durch eine strichpunktierte Linie dargestellt.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen, wie er durch die Ansprüche definiert wird.

### Bezugszeichenliste

- 10: Achskörper (Achsbrücke)
- 12: erste Achskörperschale
- 12A: erster Schenkel
- 12B: zweiter Schenkel
- 12C: dritter Schenkel
- 14: zweite Achskörperschale
- 16: Achsstummel
- 18: Bremsflansch
- 20: Befestigungsbereich
- 20A: erster Abschnitt
- 20B: zweiter Abschnitt
- 22: Befestigungsbereich
- 24: Schweißnaht
- 26: Schweißnaht
- 28: Umformwerkzeug
- 28A: erste Pressbacke
- 28B: zweite Pressbacke
- 30: flächiger Bereich
- 32: gerundeter Bereich
- 34: flächiger Bereich
- 36: gerundeter Bereich
- 38: Übergangsbereich
- 40: Übergangsbereich

- R1: Radius des gerundeten Bereichs 32
- R2: Radius des gerundeten Bereichs 36
- F: Presskraft
- b₁: Istmaß nach dem Fügen
- b₂: Istmaß nach dem Umformen
- bₛₒₗₗ: Sollmaß

## Patentansprüche

1. Verfahren zur Herstellung eines Achskörpers (10), insbesondere einer Achsbrücke, eines Kraftfahrzeugs, vorzugsweise eines Nutzfahrzeugs, aufweisend:
Fügen, insbesondere Verschweißen, einer ersten Achskörperschale (12) und einer zweiten Achskörperschale (14) zum Ausbilden eines, insbesondere hohlen, Achskörpers (10);
**gekennzeichnet durch:**
Umformen eines für eine Fahrwerksanbindung des Achskörpers (10) vorgesehenen Befestigungsbereichs (20, 22) des Achskörpers (10) zur Annäherung eines Istmaßes (b₁) des Befestigungsbereichs (20, 22) an ein für die Fahrwerksanbindung benötigtes Sollmaß (bₛₒₗₗ) des Befestigungsbereichs (20, 22).

2. Verfahren nach Anspruch 1, wobei die erste Achskörperschale (12) und/oder die zweite Achskörperschale (14) so ausgelegt sind, dass das Istmaß (b₁) des Befestigungsbereichs (20, 22) nach dem Fügen das Sollmaß (bₛₒₗₗ) des Befestigungsbereichs (20, 22) überschreitet.

3. Verfahren nach Anspruch 1 oder Anspruch 2, wobei der Befestigungsbereich (20, 22) vor dem Umformen ein erstes Istmaß (b₁), das größer als das Sollmaß (bₛₒₗₗ) ist, und nach dem Umformen ein zweites Istmaß (b₂) aufweist, das kleiner als das erste Istmaß (b₁) und/oder größer als das Sollmaß (bₛₒₗₗ) oder gleich dem Sollmaß (bₛₒₗₗ) ist.

4. Verfahren nach einem der vorherigen Ansprüche, wobei das Istmaß (b₁) und das Sollmaß (bₛₒₗₗ) einen Abstand zweier entgegengesetzter Flächen des Befestigungsbereichs (20, 22) angeben.

5. Verfahren nach einem der vorherigen Ansprüche, wobei:
der Befestigungsbereich (20, 22) einen ersten, insbesondere flächigen, vorzugsweise streifenförmigen, Abschnitt (20A) und einen zweiten, insbesondere flächigen, vorzugsweise streifenförmigen, Abschnitt (20B) aufweist, wobei sich der erste Abschnitt (20A) und der zweite Abschnitt (20B) vorzugsweise entlang einer Längsrichtung des Achskörpers (10) erstrecken und insbesondere auf gegenüberliegenden Seiten des Achskörpers (10) angeordnet sind; und
das Istmaß (b₁) und das Sollmaß (bₛₒₗₗ) einen Abstand zwischen dem ersten Abschnitt (20A) und dem zweiten Abschnitt (20B) angeben.

6. Verfahren nach einem der vorherigen Ansprüche, wobei:
das Umformen des Befestigungsbereichs (20, 22) ein Zusammenpressen des Befestigungsbereichs (20, 22) aufweist; und/oder
das Umformen des Befestigungsbereichs (20, 22) ein Umformen eines Querschnitts des Achskörpers (10) aufweist.

7. Verfahren nach einem der vorherigen Ansprüche, ferner aufweisend:
Nachbearbeiten des umgeformten Befestigungsbereichs (20, 22) zur Annäherung oder Erreichung des Sollmaßes (bₛₒₗₗ), wobei das Nachbearbeiten insbesondere ein einseitiges oder mehrseitiges Abtragen von Material am Befestigungsbereich (20, 22) aufweist.

8. Verfahren nach einem der vorherigen Ansprüche, wobei beim Umformen des Befestigungsbereichs (20, 22) ein an den Befestigungsbereich (20, 22) angrenzender Übergangsbereich (38, 40) des Achskörpers (10) zum Aufweisen einer Rundung und/oder eines tangentialen Übergangs zum Befestigungsbereich (20, 22) mitumgeformt wird.

9. Verfahren nach einem der vorherigen Ansprüche, wobei das Umformen mit einem Umformwerkzeug (28), insbesondere einem Presswerkzeug, durchgeführt wird, wobei das Umformwerkzeug (28) einen flächigen Bereich (30, 34) zum Kontaktieren des Befestigungsbereichs (20, 22) und einen gerundeten Bereich (32, 36) zum Ausbilden eines gerundeten Übergangsbereichs des Achskörpers (10) zu dem Befestigungsbereich (20, 22) aufweist, wobei der gerundete Bereich (32, 36) insbesondere tangential an den flächigen Bereich (30, 34) angrenzt.

10. Verfahren nach Anspruch 9, wobei das Umformen eine Relativbewegung zweier Pressbacken (28A, 28B) des Umformwerkzeugs (28) zueinander bis hin zu einem vorbestimmten Pressbackenabstand aufweist.

11. Verfahren nach Anspruch 9 oder Anspruch 10, wobei das Umformen eine gesteuerte Relativbewegung zweier Pressbacken (28A, 28B) des Umformwerkzeugs (28) zueinander basierend auf einem Abstand der zwei Pressbacken (28A, 28B) und einer erfassten Presskraft (F), die von den zwei Pressbacken (28A, 28B) auf den Befestigungsbereich (20, 22) ausgeübten wird, aufweist.

12. Verfahren nach einem Ansprüche 9 bis 11, ferner aufweisend:
Lösen des Umformwerkzeugs (28) vom umgeformten Befestigungsbereich (20, 22); und
Befestigen des umgeformten Befestigungsbereichs (20, 22) an einem Fahrwerk des Kraftfahrzeugs, insbesondere ohne Aufschweißen einer Befestigungskonsole und/oder eines Befestigungsstreifens auf den Befestigungsbereich (20, 22).

13. Verfahren nach einem der vorherigen Ansprüche, wobei das Umformen ein plastisches Verformen des Befestigungsbereichs (20, 22) aufweist.

14. Verfahren nach einem der vorherigen Ansprüche, wobei:
der Achskörper (10) zwei Achskörperarme (10A, 10B) aufweist, die jeweils eine erste Achskörperschale (12) und eine zweite Achskörperschale (14) zum Ausbilden des jeweiligen, insbesondere hohlen, Achskörperarms (10A, 10B) aufweisen;
die Achskörperarme (10A, 10B) sich von einem Mittelteil des Achskörpers (10) in entgegengesetzte Richtungen erstecken; und
die Befestigungsbereiche (20, 22) der zwei Achskörperarme (10A, 10B) in einem gemeinsamen Arbeitsgang, insbesondere gleichzeitig, zum Vermindern oder Ausgleichen von Winkel- und/oder Lagefehlern zwischen den Befestigungsbereichen (20, 22) der zwei Achskörperarme (10A, 10B) umgeformt werden.

15. Verfahren nach einem der vorherigen Ansprüche, wobei:
die erste Achskörperschale (12) im Wesentlichen ein U-Profil aufweist; und/oder
die zweite Achskörperschale (14) im Wesentlichen ein U-Profil aufweist; und/oder
der Achskörper (10) im Wesentlichen ein Rechteckprofil aufweist.

## Claims

1. A method for producing an axle beam (10), in particular an axle bridge, of a motor vehicle, preferably of a commercial vehicle, comprising:
joining, in particular welding, a first axle beam shell (12) and a second axle beam shell (14) for forming an, in particular hollow, axle beam (10);
**characterized by:**
shaping a fastening region (20, 22), provided for a chassis connection of the axle beam (10), of the axle beam (10) for approximating an actual dimension (b₁) of the fastening region (20, 22) to a target dimension (b_{target}), required for the chassis connection, of the fastening region (20, 22).

2. The method according to Claim 1, wherein the first axle beam shell (12) and/or the second axle beam shell (14) are/is designed such that the actual dimension (b₁) of the fastening region (20, 22) exceeds the target dimension (b_{target}) of the fastening region (20, 22) after the joining operation.

3. The method according to Claim 1 or Claim 2, wherein the fastening region (20, 22), before the shaping, has a first actual dimension (b₁) that is greater than the target dimension (b_{target}) and, after the shaping, has a second actual dimension (b₂) that is smaller than the first actual dimension (b₁) and/or greater than the target dimension (b_{target}) or equal to the target dimension (b_{target})

4. The method according to one of the preceding claims, wherein the actual dimension (b₁) and the target dimension (b_{target}) specify a distance between two opposite surfaces of the fastening region (20, 22).

5. The method according to one of the preceding claims, wherein:
the fastening region (20, 22) has a first, in particular flat, preferably strip-like, section (20A) and a second, in particular flat, preferably strip-like, section (20B), wherein the first section (20A) and the second section (20B) preferably extend along a longitudinal direction of the axle beam (10) and in particular are arranged on opposite sides of the axle beam (10); and
the actual dimension (b₁) and the target dimension (b_{target}) specify a distance between the first section (20A) and the second section (20B).

6. The method according to one of the preceding claims, wherein:
the shaping of the fastening region (20, 22) comprises compressing the fastening region (20, 22); and/or
the shaping of the fastening region (20, 22) comprises shaping of a cross section of the axle beam (10) .

7. The method according to one of the preceding claims, further comprising:
reworking the shaped fastening region (20, 22) for approximating or reaching the target dimension (b_{target}), wherein the reworking in particular comprises removal of material from one side or two or more sides of the fastening region (20, 22).

8. The method according to one of the preceding claims, wherein, during the shaping of the fastening region (20, 22), a transition region (38, 40), adjoining the fastening region (20, 22), of the axle beam (10) is also shaped for having a rounded portion and/or a tangential transition to the fastening region (20, 22).

9. The method according to one of the preceding claims, wherein the shaping is carried out using a shaping tool (28), in particular a pressing tool, wherein the shaping tool (28) has a flat region (30, 34) for making contact with the fastening region (20, 22) and a rounded region (32, 36) for forming a rounded transition region of the axle beam (10) to the fastening region (20, 22), wherein the rounded region (32, 36), in particular tangentially, adjoins the flat region (30, 34).

10. The method according to Claim 9, wherein the shaping comprises a relative movement of two pressing jaws (28A, 28B) of the shaping tool (28) in relation to one another up to a predetermined pressing jaw distance.

11. The method according to Claim 9 or Claim 10, wherein the shaping comprises a controlled relative movement of two pressing jaws (28A, 28B) of the shaping tool (28) in relation to one another based on a distance between the two pressing jaws (28A, 28B) and on a detected pressing force (F) which is exerted on the fastening region (20, 22) by the two pressing jaws (28A, 28B).

12. The method according to one of Claims 9 to 11, further comprising:
detaching the shaping tool (28) from the shaped fastening region (20, 22); and
fastening the shaped fastening region (20, 22) to a chassis of the motor vehicle, in particular without welding a fastening bracket and/or a fastening strip onto the fastening region (20, 22).

13. The method according to one of the preceding claims, wherein the shaping comprises plastic deformation of the fastening region (20, 22).

14. The method according to one of the preceding claims, wherein:
the axle beam (10) has two axle beam arms (10A, 10B) which each have a first axle beam shell (12) and a second axle beam shell (14) for forming the respective, in particular hollow, axle beam arm (10A, 10B);
the axle beam arms (10A, 10B) extend in opposite directions from a central part of the axle beam (10); and
the fastening regions (20, 22) of the two axle beam arms (10A, 10B) are shaped in a common working step, in particular at the same time, for reducing or compensating for angle and/or position errors between the fastening regions (20, 22) of the two axle beam arms (10A, 10B).

15. The method according to one of the preceding claims, wherein:
the first axle beam shell (12) substantially has a U profile; and/or
the second axle beam shell (14) substantially has a U profile; and/or
the axle beam (10) substantially has a square profile.

## Revendications

1. Procédé de fabrication d'un corps d'essieu (10), notamment d'un pont d'essieu, d'un véhicule automobile, de préférence d'un véhicule utilitaire, comprenant :
l'assemblage, notamment le soudage, d'une première coque de corps d'essieu (12) et d'une deuxième coque de corps d'essieu (14) pour la formation d'un corps d'essieu (10), notamment creux ;
**caractérisé par** :
le façonnage d'une zone de fixation (20, 22) du corps d'essieu (10) prévue pour un rattachement au châssis du corps d'essieu (10) pour rapprocher une taille réelle (b₁) de la zone de fixation (20, 22) d'une taille de consigne (bₛₒₗₗ) de la zone de fixation (20, 22) nécessaire pour le rattachement au châssis.

2. Procédé selon la revendication 1, dans lequel la première coque de corps d'essieu (12) et/ou la deuxième coque de corps d'essieu (14) sont dimensionnées de telle sorte que la taille réelle (b₁) de la zone de fixation (20, 22) après l'assemblage dépasse la taille de consigne (bₛₒₗₗ) de la zone de fixation (20, 22) .

3. Procédé selon la revendication 1 ou la revendication 2, dans lequel la zone de fixation (20, 22) présente, avant le façonnage, une première taille réelle (b₁) qui est supérieure à la taille de consigne (bₛₒₗₗ) et, après le façonnage, une deuxième taille réelle (b₂) qui est inférieure à la première taille réelle (b₁) et/ou supérieure à la taille de consigne (bₛₒₗₗ) ou égale à la taille de consigne (bₛₒₗₗ) .

4. Procédé selon l'une quelconque des revendications précédentes, dans lequel la taille réelle (b₁) et la taille de consigne (bₛₒₗₗ) indiquent un écart entre deux surfaces opposées de la zone de fixation (20, 22).

5. Procédé selon l'une quelconque des revendications précédentes, dans lequel :
la zone de fixation (20, 22) comprend une première section (20A), notamment plate, de préférence en forme de bande, et une deuxième section (20B), notamment plate, de préférence en forme de bande, la première section (20A) et la deuxième section (20B) s'étendant de préférence le long d'une direction longitudinale du corps d'essieu (10) et étant notamment agencées sur des côtés en vis-à-vis du corps d'essieu (10) ; et
la taille réelle (b₁) et la taille de consigne (bₛₒₗₗ) indiquent un écart entre la première section (20A) et la deuxième section (20B).

6. Procédé selon l'une quelconque des revendications précédentes, dans lequel :
le façonnage de la zone de fixation (20, 22) comprend une compression de la zone de fixation (20, 22) ; et/ou
le façonnage de la zone de fixation (20, 22) comprend un façonnage d'une section transversale du corps d'essieu (10).

7. Procédé selon l'une quelconque des revendications précédentes, comprenant en outre :
le post-usinage de la zone de fixation façonnée (20, 22) pour se rapprocher de ou atteindre la taille de consigne (bₛₒₗₗ), le post-usinage comprenant notamment un enlèvement monolatéral ou multilatéral de matériau au niveau de la zone de fixation (20, 22).

8. Procédé selon l'une quelconque des revendications précédentes, dans lequel, lors du façonnage de la zone de fixation (20, 22), une zone de transition (38, 40) du corps d'essieu (10) adjacente à la zone de fixation (20, 22) est façonnée conjointement pour présenter un arrondissement et/ou une transition tangentielle vers la zone de fixation (20, 22).

9. Procédé selon l'une quelconque des revendications précédentes, dans lequel le façonnage est réalisé avec un outil de façonnage (28), notamment un outil de pression, dans lequel l'outil de façonnage (28) comprend une zone plate (30, 34) pour venir en contact avec la zone de fixation (20, 22) et une zone arrondie (32, 36) pour former une zone de transition arrondie du corps d'essieu (10) vers la zone de fixation (20, 22), dans lequel la zone arrondie (32, 36) est notamment adjacente à la zone plate (30, 34) de manière tangentielle.

10. Procédé selon la revendication 9, dans lequel le façonnage comprend un déplacement relatif de deux mâchoires de pression (28A, 28B) de l'outil de façonnage (28) l'une par rapport à l'autre jusqu'à un écart prédéterminé entre les mâchoires de pression.

11. Procédé selon la revendication 9 ou la revendication 10, dans lequel le façonnage comprend un déplacement relatif commandé de deux mâchoires de pression (28A, 28B) de l'outil de façonnage (28) l'une par rapport à l'autre sur la base d'un écart des deux mâchoires de pression (28A, 28B) et d'une force de pression déterminée (F), qui est exercée par les deux mâchoires de pression (28A, 28B) sur la zone de fixation (20, 22).

12. Procédé selon l'une quelconque des revendications 9 à 11, comprenant en outre :
le détachement de l'outil de façonnage (28) de la zone de fixation façonnée (20, 22) ; et
la fixation de la zone de fixation façonnée (20, 22) à un châssis du véhicule automobile, notamment sans soudage d'une console de fixation et/ou d'une bande de fixation sur la zone de fixation (20, 22).

13. Procédé selon l'une quelconque des revendications précédentes, dans lequel le façonnage comprend une déformation plastique de la zone de fixation (20, 22).

14. Procédé selon l'une quelconque des revendications précédentes, dans lequel :
le corps d'essieu (10) comprend deux bras de corps d'essieu (10A, 10B), qui comprennent chacun une première coque de corps d'essieu (12) et une deuxième coque de corps d'essieu (14) pour former le bras de corps d'essieu (10A, 10B) respectif, notamment creux ;
les bras de corps d'essieu (10A, 10B) s'étendent à partir d'une partie centrale du corps d'essieu (10) dans des directions opposées ; et
les zones de fixation (20, 22) des deux bras de corps d'essieu (10A, 10B) sont façonnées dans une opération commune, notamment simultanément, pour éviter ou compenser des défauts d'angle et/ou de position entre les zones de fixation (20, 22) des deux bras de corps d'essieu (10A, 10B).

15. Procédé selon l'une quelconque des revendications précédentes, dans lequel :
la première coque de corps d'essieu (12) présente essentiellement un profil en U ; et/ou
la deuxième coque de corps d'essieu (14) présente essentiellement un profil en U ; et/ou
le corps d'essieu (10) présente essentiellement un profil rectangulaire.
